(19) Europäisches Patentamt
European Patent Office
Office européen des brevets

(11) **EP 3 097 444 B1**

(12) **FASCICULE DE BREVET EUROPEEN**

(45) Date de publication et mention de la délivrance du brevet:
**14.08.2019 Bulletin 2019/33**

(21) Numéro de dépôt: **15705513.8**

(22) Date de dépôt: **23.01.2015**

(51) Int Cl.:
**G02B 6/02** (2006.01)

(86) Numéro de dépôt international:
**PCT/EP2015/051377**

(87) Numéro de publication internationale:
**WO 2015/110590 (30.07.2015 Gazette 2015/30)**

(54) **DISPOSITIF À FIBRE OPTIQUE À SEUIL BRILLOUIN ÉLEVÉ ET MÉTHODE DE FABRICATION D'UN TEL DISPOSITIF**

VORRICHTUNG MIT EINER OPTISCHEN FASER MIT HOHER BRILLOUIN-SCHWELLE UND VERFAHREN ZUR HERSTELLUNG SOLCH EINER VORRICHTUNG

DEVICE COMPRISING AN OPTICAL FIBRE HAVING A HIGH BRILLOUIN THRESHOLD AND METHOD FOR MANUFACTURING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2014 FR 1450627**

(43) Date de publication de la demande:
**30.11.2016 Bulletin 2016/48**

(73) Titulaire: **Office National d'Etudes et de Recherches Aérospatiales (ONERA)
91120 Palaiseau (FR)**

(72) Inventeurs:
• **CANAT, Guillaume**
  **91140 Villebon sur Yvette (FR)**
• **RENARD, William**
  **33800 Bordeaux (FR)**
• **LOMBARD, Laurent**
  **75013 Paris (FR)**
• **FLEURY, Didier**
  **92140 Clamart (FR)**

(74) Mandataire: **Osha Liang
2, rue de la Paix
75002 Paris (FR)**

(56) Documents cités:
**US-A- 5 136 673      US-A1- 2007 019 918**

• **YOSHIZAWA N ET AL: "STIMULATED BRILLOUIN SCATTERING SUPPRESSION BY MEANS OF APPLYING STRAIN DISTRIBUTION TO FIBER WITH CABLING", JOURNAL OF LIGHTWAVE TECHNOLOGY, IEEE SERVICE CENTER, NEW YORK, NY, US, vol. 11, no. 10, 1 octobre 1993 (1993-10-01), pages 1518-1522, XP000418369, ISSN: 0733-8724, DOI: 10.1109/50.249889**

**Description**

**Domaine technique de l'invention**

La présente invention concerne un dispositif à fibre optique à seuil Brillouin élevé et une méthode de fabrication d'un tel dispositif. L'invention s'applique notamment aux amplificateurs à fibre optique, ou aux dispositifs à fibre optique destinés au transport d'informations.

**Etat de l'art**

Dans les systèmes de communication optique à fibre optique ou dans les amplificateurs à fibre optique, un faisceau laser incident fin spectralement (i.e. mono fréquence ou de largeur spectrale inférieure à 100 GHz), appelé dans la suite de la description faisceau signal, est couplé dans une fibre optique. Dans le cas des systèmes de communication optique, le faisceau signal doit être de forte puissance optique pour être transmis sur de longues distances. Dans le cas des amplificateurs à fibre optique, le faisceau signal est amplifié dans une fibre optique amplificatrice au moyen d'un faisceau laser dit faisceau pompe.

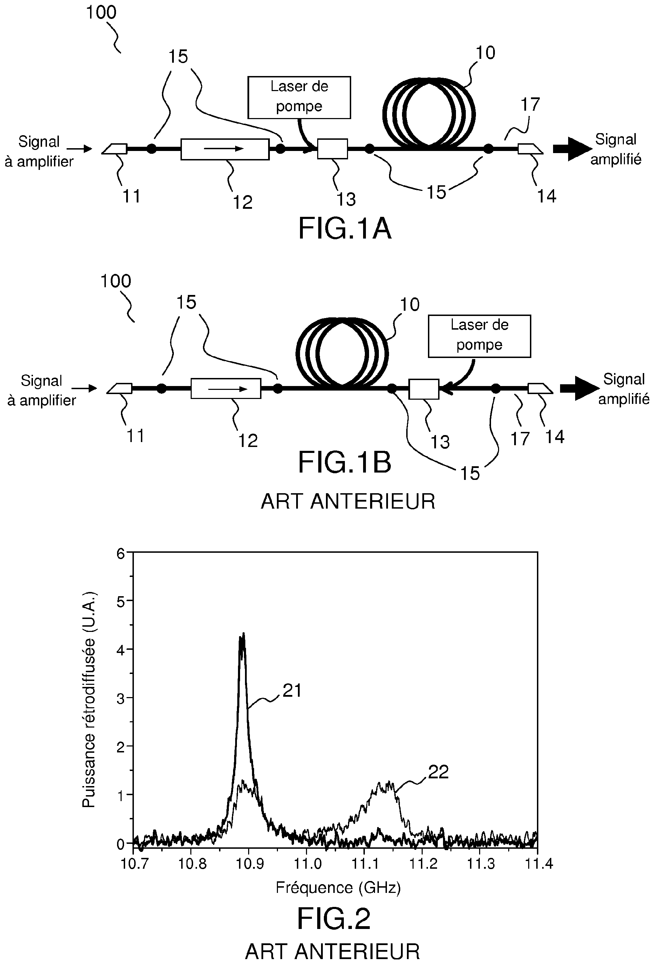

Les figures 1A et 1B illustrent ainsi deux exemples d'amplificateurs 100 comprenant une fibre optique amplificatrice 10 et fonctionnant respectivement en mode copropagatif et contrapropagatif. Le dispositif de couplage du faisceau signal que l'on cherche à amplifier comprend dans les exemples des figures 1A et 1B des éléments de couplage fibrés dont par exemple un connecteur 11. Alternativement, le couplage du faisceau signal ou du faisceau pompe incidents dans la fibre amplificatrice peut être obtenu par des éléments optiques non fibrés. L'amplificateur 100 peut comprendre d'autres éléments optiques passifs fibrés, par exemple un isolateur, un filtre, un ou plusieurs connecteurs. Dans l'exemple illustré sur les figures 1A et 1B, un isolateur 12 est agencé entre le connecteur 11 et la fibre amplificatrice 10 par exemple au moyen de soudures 15. Notamment, l'amplificateur 100 peut comprendre un élément optique fibré muni d'un cordon de fibre optique passive 17 en sortie de fibre amplificatrice 10. L'élément fibré est par exemple un connecteur 14 permettant de diriger le faisceau amplifié vers d'autres composants optiques destinés à collimater ou focaliser le faisceau amplifié. Un dispositif de couplage 13 permet de la même façon de coupler le faisceau pompe dans la fibre. Le faisceau pompe est par exemple issu d'une source laser comme une diode laser. Dans le cas de pompage copropagatif, le même composant optique de couplage peut permettre de coupler le faisceau signal et le faisceau pompe.

Que ce soit pour une fibre optique destinée à transporter un faisceau de forte puissance ou pour un amplificateur à fibre optique tel que représenté par exemple sur l'une ou l'autre des figures 1A et 1B, on peut observer au-delà d'une puissance optique seuil ($P_{th}$), une saturation de la puissance optique transmise lorsque la largeur spectrale du laser est faible (typiquement inférieure à 100 GHz) due à un effet non linéaire dans la fibre appelé diffusion Brillouin stimulée (ou effet SBS selon l'abréviation de l'expression anglo-saxonne « Stimulated Brillouin Scattering »).

Plus précisément, au-delà de la puissance optique seuil, appelée seuil Brillouin, la puissance optique additionnelle est réfléchie sous forme d'une onde dite onde Stokes résultant de l'interaction de l'onde incidente avec des ondes acoustiques auto générées qui se propagent dans la fibre optique. Dans la suite de la demande, le seuil Brillouin est défini comme la puissance en sortie de dispositif telle que la puissance rétrodiffusée par la diffusion Brillouin stimulée atteigne 10% de la puissance en sortie du dispositif. L'onde Stokes est générée par amplification des photons issus du bruit quantique se propageant en sens contraire du faisceau signal. Elle présente une fréquence optique $v_s$ décalée en fréquence (par effet Doppler) selon $v_s = v - v_B$ où v est la fréquence de l'onde incidente et $v_B$, appelée fréquence Brillouin, est la fréquence de l'onde acoustique (environ 11 GHz pour un faisceau signal à 1,5 $\mu$m). La courbe de gain correspondante possède une forme en général Lorentzienne centrée autour de $v_B$ et de largeur comprise entre $\Delta v_B \sim 20$ MHz et $\Delta v_B \sim 200$ MHz (typiquement 40 MHz). Il est aisé de mesurer le spectre de l'onde Stokes rétrodiffusée. Dans la limite où le gain subi par les photons Stokes est faible (inférieur à $10^5$ typiquement), le spectre de l'onde Stokes est proportionnel au spectre du gain Brillouin. La fréquence Brillouin $v_B$ est une fonction de la vitesse locale des ondes acoustiques de la fibre. Il est établi dans la littérature que $v_B$ dépend de la composition de la fibre, de son état de déformation longitudinale relative $\varepsilon$ et de la température. La déformation longitudinale relative $\varepsilon$ d'un élément de fibre de longueur initiale $L_0$ et de longueur dans son état déformé L est donnée par $\varepsilon = L/L_0 - 1$. On désignera par la suite $\varepsilon$ simplement par déformation relative.

De nombreuses publications ont proposé des techniques de réduction de l'effet SBS dans les dispositifs à fibre optique. Notamment, en faisant varier $v_B$ le long de la fibre, on augmente le seuil d'apparition de l'effet SBS car l'amplification de l'onde Stokes n'est cumulative que dans la bande de gain $\Delta v_B$. Il a ainsi été proposé (voir R. Engelbrecht et al. "SBS shaping and suppression by arbitrary strain distributions realized by a fiber coiling machine", IEEE/LEOS Winter Topicals Meeting Series, 2009, paper WC1.3., pp.248-249, 12-14 Jan. 2009) une machine permettant de bobiner une fibre optique avec un profil d'élongation variable le long de la fibre. L'article décrit comment une fibre optique passive peut être enroulée sur un cylindre en variant la tension appliquée lors de l'enroulement avec un dévidoir piloté par ordinateur, permettant un élargissement de la courbe de gain Brillouin accompagnée d'une augmentation significative du seuil Brillouin.

La figure 2 illustre ainsi le spectre de la puissance rétrodiffusée par le SBS qui est proportionnel au gain Brillouin d'une fibre Corning® Panda PM1550 de 5 m sans contrainte (courbe 21) et de la même fibre, mais dont une longueur de 2,5 m est soumise à une déformation relative de +0,6 % (courbe 22). Sur cet exemple, la longueur d'onde utilisée est de 1545nm. On observe sur la courbe 22 une variation de la fréquence Brillouin $v_B$; la variation $\delta v_B$ de la fréquence Brillouin $v_B$ d'une fibre soumise à une déformation relative $\varepsilon$ est proportionnelle à la déformation relative $\varepsilon$ selon l'équation $\delta v_B = K\varepsilon$.

Bien que la plupart des dispositifs décrits dans l'art antérieur décrivent des dispositifs avec une élongation variable de la fibre pour l'augmentation du seuil Brillouin, il est également intéressant de chercher à travailler en compression de la fibre, car la contrainte maximale que peut supporter une fibre optique en compression avant qu'elle ne casse est beaucoup plus élevée qu'en allongement (environ 20 fois plus forte).

Le brevet US5136673 décrit ainsi un dispositif à fibre optique pour les communications à longue distance, à seuil Brillouin élevé, et une méthode de fabrication d'un tel dispositif. Dans ce document, une pluralité de fibres optiques présentant une élongation variable sont fixées autour d'un câble central lui-même en tension, le câble étant ensuite relâché. En s'assurant que l'élongation moyenne des fibres optiques est supérieure à la tension du câble, on obtient une structure dans laquelle les fibres optiques présentent un profil de contraintes longitudinales variable, en tension et en compression, la déformation relative $\varepsilon$ en compression restant limitée à moins de 0.2% en valeur absolue.

Il est connu en effet que des contraintes de compression appliquées à une fibre optique entraînent au-delà d'un certain seuil un phénomène dit de « flambage » se traduisant par une flexion de la fibre dans une direction perpendiculaire à l'axe de compression, flexion qui peut induire des pertes optiques importantes (voir par exemple M. H. Reeves et al., « investigation of optical fibre buckling in loose-tube packaging », Electronics Letters, Vol. 14, N°3, 1978), N. Yoshizawa et al., " Stimulated Brillouin Scattering Suppression by Means of Applying Strain Distribution to Fiber with Cabling", JOURNAL OF LIGHTWAVE TECHNOLOGY, Vol. 11, no. 10, (1993-10-01), pages 1518-1522, divulgue les caractéristiques du préambule de la revendication 1.

Ainsi, le dispositif décrit dans le brevet US5136673 propose le maintien des fibres optiques dans une contrainte de tension moyenne, ce qui présente l'inconvénient d'accélérer leur usure, ou le maintien des fibres optiques dans une contrainte de compression limitée à une valeur inférieure en valeur absolue à 0.2% pour éviter le flambage, ce qui présente cependant l'inconvénient de limiter l'accroissement possible du seuil Brillouin.

Un objet de l'invention consiste à proposer un dispositif à fibre qui présente un seuil Brillouin élevé sans les limitations de l'art antérieur. Notamment, un objet de l'invention est de proposer un dispositif à fibre optique fonctionnant à température ambiante, dans lequel une contrainte compressive est appliquée à la fibre optique dans le but d'augmenter le seuil Brillouin, tout en limitant le phénomène de flambage. Un objet de l'invention est par ailleurs de proposer une méthode de réalisation d'un tel dispositif simple à mettre en oeuvre.

RESUME DE L'INVENTION

Selon un premier aspect, la présente demande concerne un dispositif à fibre optique à seuil Brillouin élevé selon la revendication 1.

Les déposants ont montré qu'une structure tubulaire ainsi formée pour immobiliser la fibre optique permettait d'atteindre des déformations relatives négatives de la fibre optique importantes sans flambage, et de ce fait des augmentations significatives du seuil Brillouin dans les dispositifs à fibre optique destinés au transport de signaux de puissance optique élevée, notamment les amplificateurs à fibres optiques et les fibres destinées au transport de forte puissance crête tels que les cordons.

Selon une variante, la partie immobilisée de la fibre optique présente un état de compression avec un profil de déformation relative variable le long de ladite partie immobilisée de la fibre optique. On obtient ainsi une réduction de la longueur effective sur laquelle se cumule l'amplification Brillouin par rapport à une situation où la fibre subirait une déformation constante.

Selon une variante, le profil de déformation relative de la fibre optique est tel que la déformation relative de la partie immobilisée de la fibre optique soit comprise entre -0,3% et 0,3% au voisinage de chaque extrémité de la fibre optique. Cette variante permet de réduire les forces de cisaillement qui pourraient s'exercer aux interfaces entre les différentes couches et de réduire ainsi le risque de délaminage.

Selon une variante, le module de Young équivalent du premier matériau adhésif est supérieur ou égal à 200 MPa, avantageusement 500 MPa. En choisissant un matériau adhésif suffisamment rigide, la déposante a montré que la fibre optique peut supporter des déformations relatives négatives importantes (de valeur absolue supérieure à 0,7%) sans flamber.

Selon une variante, le premier matériau adhésif est polymérisable par radiation lumineuse de longueur d'onde d'activation donnée et le premier tube est au moins partiellement transparent à ladite longueur d'onde d'activation, présentant une transparence supérieure à 30% typiquement.

Selon une variante, $E_1$, $E_2$, $E_3$ étant les modules d'Young équivalents respectivement de la fibre optique, du premier matériau adhésif et du premier tube, et $S_1$, $S_2$, $S_3$ étant les sections équivalentes respectives de la fibre optique, du premier matériau adhésif et du premier tube, l'inéquation $E_1S_1 + E_2S_2 < E_3S_3$ est respectée. Le choix de ces paramètres permet de générer des fortes déformations relatives en compression de la fibre optique.

Selon une variante, le module de rigidité à la flexion de la structure tubulaire est inférieur à 10000 N.mm$^2$, ce qui permet de préserver la souplesse de la structure tubulaire contenant la fibre.

Selon une variante, le matériau formant le premier tube appartient à la famille des polycarbonates ou des polyamides. Ces matériaux présentent à la fois une limite d'élasticité élevée (supérieure à 1%), un module d'Young important (supérieur à 1 GPa) et un module de rigidité à la flexion faible, permettant de garder un module de rigidité faible pour la structure tubulaire (typiquement inférieur à 50000 N.mm$^2$, voire inférieur à 10000 N.mm$^2$).

Selon une variante, la structure tubulaire comprend au moins un deuxième tube et au moins un deuxième matériau adhésif, tels que :

    ◦ Le premier tube est immobilisé dans le deuxième tube au moyen du deuxième matériau adhésif, adhérent à la surface interne du deuxième tube et à la surface externe du premier tube ;

    ◦ à température ambiante et sans autres contraintes extérieures sur le dispositif, le premier tube est maintenu dans un état de compression par au moins ledit deuxième tube.

Un tel arrangement de la structure tubulaire permet d'accroître la contrainte en compression sur la fibre optique située au centre de la structure.

Selon une variante, la structure tubulaire comprend en outre des éléments de renfort contribuant au maintien de la fibre optique dans ledit état de compression, les éléments de renfort étant positionnés dans l'espace interne formé entre la surface externe de la fibre optique et la surface interne du tube et immobilisés au moyen dudit premier matériau adhésif. Là encore, il est possible grâce aux éléments de renfort, d'accroître la contrainte en compression sur la fibre optique.

Selon une variante, la fibre optique est une fibre adaptée au transport d'un faisceau lumineux et l'état de compression de ladite fibre optique présente un profil triangulaire avec un maximum en valeur absolue en un point situé à une position $L_1$ = x.L où $0,4 \leq x \leq 0,6$.

Selon une variante, la fibre optique étant une fibre optique amplificatrice de longueur L donnée, comprenant un coeur et une gaine, et étant adaptée à l'amplification d'un faisceau signal se propageant dans ledit coeur, le dispositif comprend en outre des moyens de couplage d'un faisceau pompe pour le pompage de ladite fibre optique amplificatrice.

Selon une variante, les moyens de couplage du faisceau pompe sont adaptés à un pompage de la fibre optique amplificatrice en configuration copropagative dans la gaine ; et l'état de compression de la fibre optique amplificatrice présente un profil triangulaire avec un maximum en valeur absolue en un point situé à une position $L_1$ = x.L où $0,4 \leq x \leq 0,6$.

Selon une variante alternative, les moyens de couplage du faisceau pompe sont adaptés à un pompage de la fibre optique amplificatrice en configuration contrapropagative dans la gaine ou à un pompage de la fibre optique amplificatrice en configuration copropagative ou contrapropagative dans le coeur; et l'état de compression de la fibre optique amplificatrice présente un profil triangulaire avec un maximum en valeur absolue en un point situé à une position $L_1$ = x.L où $0,5 \leq x \leq 0,9$.

Selon un deuxième aspect, l'invention concerne un système oscillateur maître amplifié comprenant une source d'émission laser d'un faisceau signal, une source d'émission laser d'un faisceau pompe et un dispositif à fibre optique selon le premier aspect, destiné à amplifier ledit faisceau signal, dans lequel ledit faisceau pompe est couplé à la fibre optique amplificatrice du dispositif.

Selon un troisième aspect, l'invention concerne une méthode de fabrication d'un dispositif à fibre optique à seuil Brillouin élevé comprenant :

- La mise en place d'une partie au moins d'une fibre optique dans un espace interne d'un premier tube d'une structure tubulaire ;

- L'étirement d'une partie au moins de la structure tubulaire ;

- Le remplissage de l'espace interne du premier tube avec un premier matériau adhésif polymérisable ;

- La polymérisation du premier matériau adhésif ;

- Le relâchement de la partie étirée de la structure tubulaire, entraînant une mise en compression de la fibre optique.

Il est ainsi possible avec une méthode de fabrication simple à mettre en oeuvre, d'atteindre des contraintes en compression de la fibre optique très importante, sans risque de flambage.

Selon une variante, la polymérisation du premier matériau adhésif est faite zone par zone et ladite partie étirée de la structure tubulaire est relâchée au fur et à mesure que l'on déplace la zone de polymérisation du premier matériau adhésif.

Selon une autre variante, le remplissage de l'espace interne de la structure tubulaire avec le premier matériau adhésif est fait avant l'étirement de la structure tubulaire, la polymérisation du premier matériau adhésif est faite zone par zone et la structure tubulaire est étirée au fur et à mesure que l'on déplace la zone de polymérisation du premier matériau adhésif.

Selon une variante, l'étirement d'une partie au moins de la structure tubulaire comprend l'étirement du premier tube.

Selon une variante, la méthode comprend en outre, après la polymérisation du premier matériau adhésif et le relâchement du premier tube étiré :

- La mise en place du premier tube dans un espace interne d'un deuxième tube de la structure tubulaire ;

- L'étirement du deuxième tube ;

- Le remplissage de l'espace interne du deuxième tube avec un deuxième matériau adhésif polymérisable ;

- La polymérisation du deuxième matériau adhésif ;

- le relâchement du deuxième tube étiré, entraînant une mise en compression du premier tube.

Selon une variante, la méthode comprend en outre la mise en place dans l'espace interne du premier tube d'au moins un élément de renfort, l'étirement d'une partie au moins de la structure tubulaire comprenant l'étirement du ou des élément(s) de renfort.

BREVE DESCRIPTION DES DESSINS

D'autres avantages et caractéristiques de l'invention apparaîtront à la lecture de la description, illustrée par les figures suivantes :

Figures 1A et 1B, des schémas d'un amplificateur à fibre selon l'art antérieur adapté pour fonctionner respectivement en mode copropagatif et contrapropagatif (déjà décrites) ;

Figure 2, des courbes expérimentales illustrant l'allure spectrale du gain Brillouin dans deux fibres optiques, l'une sans contrainte et l'autre présentant un étirement sur une partie de sa longueur (déjà décrite) ;

Figures 3 à 5, des schémas représentant des exemples de structures tubulaires d'un dispositif à fibre optique selon la présente description et des courbes représentant des exemples de profil radial de déformation relative pour chacune des structures tubulaires ;

Figures 6A et 6B, respectivement une vue partielle d'un exemple de dispositif à fibre optique selon la présente description et une courbe représentant un exemple de profil axial de déformation relative d'une fibre optique d'un dispositif selon la figure 6A;

Figures 7A et 7B, respectivement une vue partielle d'un exemple de dispositif à fibre optique selon la présente description et une courbe représentant un exemple de profil axial de déformation relative d'une fibre optique d'un dispositif selon la figure 7A;

Figures 8A à 8D, des schémas montrant les étapes d'un exemple de méthode de fabrication d'un dispositif à fibre optique selon la présente description ;

Figure 9, un diagramme montrant le module de rigidité et la déformation relative transmise pour différents matériaux adaptés à la réalisation d'un tube de la structure tubulaire selon la présente description ;

Figure 10, des schémas montrant respectivement le profil axial de la déformation relative d'une fibre optique et d'un tube d'une structure tubulaire dans laquelle est immobilisée la fibre, selon une variante de fabrication d'un dispositif selon la présente description ;

Figure 11, une courbe illustrant le profil axial de la déformation relative d'une fibre optique, selon une variante de fabrication d'un dispositif selon la présente description ;

Figure 12, des courbes expérimentales illustrant dans un premier exemple de réalisation l'allure spectrale du gain Brillouin dans une fibre optique destinée à la communication optique, respectivement dans un premier cas où la fibre optique est sans contrainte et dans un deuxième cas où la fibre optique est immobilisée dans une structure tubulaire selon la présente description ;

Figure 13A, des courbes expérimentales illustrant dans un deuxième exemple de réalisation l'allure spectrale du gain Brillouin dans une fibre optique destinée à l'amplification optique, respectivement dans un premier cas où la fibre optique est sans contrainte et dans un deuxième cas où la fibre optique est immobilisée dans une structure tubulaire selon la présente description, et figure 13B un schéma illustrant, selon un exemple, la forme des impulsions en sortie de l'amplificateur optique dans le premier et dans le deuxième cas ;

Figure 14, des courbes expérimentales illustrant dans un troisième exemple de réalisation l'allure spectrale du gain Brillouin dans une fibre optique destinée à la communication optique, respectivement dans un premier cas où la fibre optique est sans contrainte et dans un deuxième cas où la fibre optique est immobilisée dans une structure tubulaire selon la présente description.

DESCRIPTION DETAILLEE

Selon un premier aspect, la présente description concerne un dispositif à fibre optique à seuil Brillouin élevé. Le dispositif comprend une fibre optique adaptée à la propagation d'un faisceau signal de forte puissance optique, par exemple un faisceau signal mono fréquence ou de largeur spectrale inférieure à 100 GHz et des moyens de couplage d'un faisceau signal dans une extrémité d'entrée de la fibre optique. Le dispositif comprend en outre une structure tubulaire permettant le maintien de la fibre optique dans un état de compression, à température ambiante et sans autres contraintes extérieures. Plus précisément, la structure tubulaire comprend au moins un premier tube et au moins un premier matériau adhésif, la fibre optique étant immobilisée dans la structure tubulaire sur une partie au moins au moyen du premier matériau adhésif, adhérent à la surface interne du premier tube et à la surface externe de la fibre optique. Cette structure originale permet le maintien de la fibre optique dans un état de compression sur toute la longueur immobilisée dans la structure tubulaire et sans risque de flambage, la déformation relative de la fibre optique présentant une valeur maximale en valeur absolue supérieure à 0,3%.

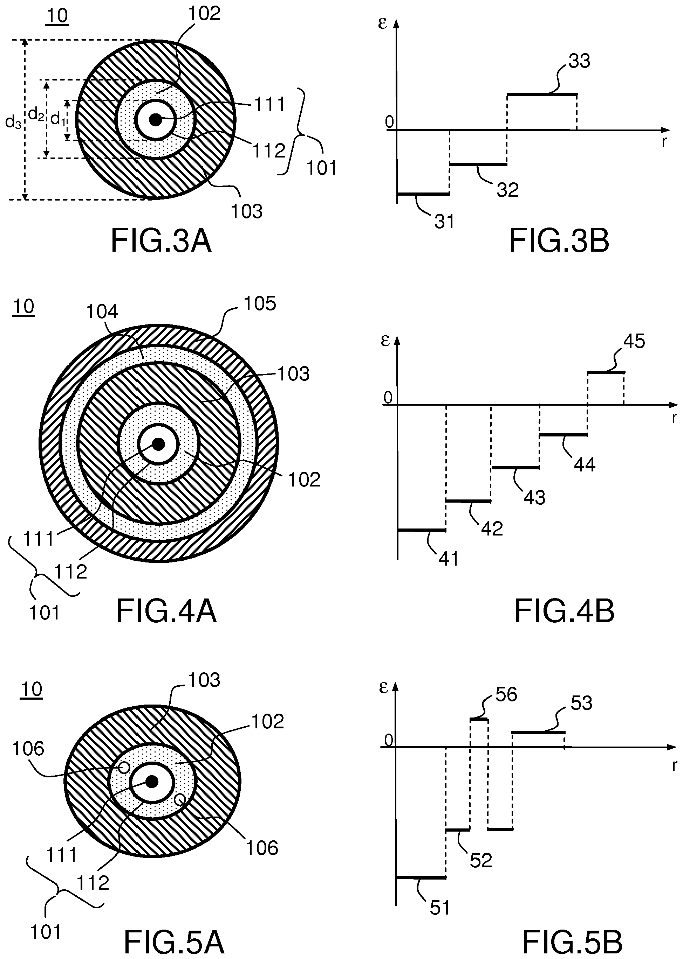

Les figures 3 à 5 illustrent des exemples de structures tubulaires 10 d'un dispositif selon la présente description, dans lesquelles est immobilisée une fibre optique 101 maintenue en compression.

La fibre optique 101 comprend un coeur 111 d'indice de réfraction $n_1$ et une gaine 112 d'indice de réfraction $n_2$, par exemple une gaine en silice. La fibre optique 101 peut comprendre également une gaine de protection, par exemple une gaine en matériau polymère, d'indice de réfraction $n_3$ (non représenté sur les figures 3 à 5). Selon une variante, la gaine de protection en polymère de la fibre optique est préalablement retirée en vue de son immobilisation dans la structure tubulaire. Un faisceau signal incident dans le dispositif à fibre optique est couplé dans le coeur 111 de la fibre 101 par des moyens de couplage de type connu, par exemple tels que décrits précédemment au moyen des figures 1A et 1B. Dans le cas où le dispositif est un amplificateur à fibre optique, le coeur de la fibre optique est dopé, par exemple avec des ions terres rares. Un faisceau pompe peut être couplé (dans le coeur ou dans la gaine) en début de fibre (pompage co-propoagatif) ou en fin de fibre (pompage contrapropagatif). La gaine en silice de certains types de fibre optique peut comporter une couche assurant le guidage du faisceau pompe. La gaine de protection peut dans certains types de fibre optique permettre le guidage du faisceau pompe ; dans ce cas, l'inéquation $n_3 < n_2$ est respectée. De façon générale, le polymère pour la gaine de protection peut appartenir à différentes familles (polyamides, polyacrylates...) de propriétés mécaniques différentes. Dans la suite de la description, on s'intéressera aux propriétés mécaniques de la fibre optique prise dans son ensemble et on définira un module d'Young équivalent $E_1$ de la fibre optique 101, défini de la façon suivante. On considère un tronçon de fibre de section en silice S, éventuellement entourée d'une gaine de protection en polymère, et de longueur au repos L dont la longueur après déformation sous l'action d'une force F devient L+ΔL. Le module de Young équivalent est alors défini par

$$E_1 = \left(\frac{\Delta L}{L}\right)^{-1} \frac{F}{S}$$

Dans cette équation, la contribution éventuelle de la gaine de protection en matériau polymère est négligeable.

La figure 3A illustre un premier exemple d'une structure tubulaire d'un dispositif à fibre optique conforme à l'invention. La fibre optique 101, de diamètre extérieur $d_1$, est placée à l'intérieur d'un tube 103 de diamètre extérieur $d_3$ et de diamètre intérieur $d_2$. L'espace entre le tube et la fibre est rempli d'un matériau adhésif 102. Le remplissage est avantageusement le plus complet et le plus uniforme possible. Le matériau adhésif peut par exemple être une colle ou une résine. La figure 3B illustre le profil radial de la déformation relative $\varepsilon$ des différents éléments de la structure. La fibre est placée dans un état de contrainte compressive (déformation relative négative représenté par le segment 31). Le tube est dans un état de déformation relative positive (i.e. étiré), voire presque nulle, représenté par le segment 33 sur la figure 3B. Le matériau adhésif 102 est dans un état de compression intermédiaire entre celui de la fibre optique et celui du tube (segment 32). Le tube présente une rigidité suffisante pour maintenir en compression la fibre optique et le matériau adhésif. Le matériau adhésif permet quant à lui de limiter fortement le flambage de la fibre optique. En effet, lorsqu'une fibre optique est soumise à des contraintes compressives, elle tend à flamber de sorte que la position de son axe se conforme à une hélice. En choisissant un matériau adhésif suffisamment rigide, de module d'Young typiquement supérieur ou égal à 200 MPa, préférentiellement 500 MPa, la déposante à montré que la fibre optique peut supporter des déformations relatives négatives de valeur absolue supérieure à 0,7% sans flamber, c'est-à-dire avec une faible déviation de son axe par rapport à la position initiale, rendant les pertes par courbure négligeables pour les applications visées (typiquement inférieure à 0.5 dB/m).

La figure 4A illustre un deuxième exemple d'une structure tubulaire d'un dispositif à fibre optique conforme à l'invention. Comme dans l'exemple précédent, la fibre optique est maintenue en compression dans un premier tube 103 au moyen d'un premier matériau adhésif 102. La structure tubulaire 10 comprend dans cet exemple un deuxième tube 105 à l'intérieur duquel se trouve le tube 103. Le deuxième tube 105 maintient lui-même en compression le premier tube 103, permettant d'accroître la contrainte en compression sur la fibre optique située dans la zone centrale de la structure. L'espace entre le premier tube 103 et le deuxième tube 105 est rempli d'un deuxième matériau adhésif 104. La figure 4B représente le profil radial de la déformation relative $\varepsilon$ des différents éléments de la structure représentée sur la figure 4A, selon un exemple. Le tube 105 est dans un état de déformation relative positive (i.e. étiré) voire presque nulle (état représenté par le segment 45). Le tube 103 est dans un état de contrainte en compression (état 43). La fibre optique est dans un état de contrainte en compression (état 41). Le premier matériau adhésif 102 et le deuxième matériau adhésif 104 sont dans des états de compression intermédiaires (respectivement 42, 44), la déformation relative étant comprise respectivement entre celle de la fibre optique 101 et du premier tube 103 et celle du premier tube 103 et du deuxième tube 105. La structure tubulaire ainsi décrite n'est pas limitée à 2 tubes. Elle permet d'accroître la compression sur la fibre optique située au centre de la structure, notamment dans le cas où la compression maximale qui peut être transmise par le premier tube à la fibre optique est insuffisante.

La figure 5A illustre un troisième exemple d'une structure tubulaire d'un dispositif à fibre optique conforme à l'invention. La fibre optique 101 est maintenue en compression dans le tube 103 au moyen du matériau adhésif 102. La structure tubulaire 10 comprend en outre dans cet exemple des éléments de renfort 106, par exemple deux morceaux de fibre en silice placés dans l'espace entre le tube 103 et la fibre optique 101, immobilisés par le matériau adhésif 102. Comme cela apparaît sur la figure 5B montrant le profil radial de la déformation relative $\varepsilon$ des différents éléments de la structure, le tube 103 est dans un état de contrainte en tension même très faible. Les éléments de renfort 106 sont dans un état de contrainte de tension ou sont très faiblement contraints longitudinalement (état 56). La fibre optique est sous un état de contrainte de compression (état 51). Le matériau adhésif présente un état de contrainte en compression (état 52) compris entre celui de la fibre optique et celui du tube 103. La compression est dans cet exemple transmise essentiellement par les éléments de renfort qui présentent une rigidité (égale au produit du module de Young par leur section) supérieure à celle du tube. Le matériau adhésif qui adhère à la surface extérieure de la fibre optique 101, à la surface interne du tube 103 et à la surface externe des éléments de renfort 106 agencés dans l'espace interne formé entre la fibre optique 101 et la surface interne du tube 103, permet de limiter le flambage de la fibre optique même pour des déformations relatives fortes en valeur absolue.

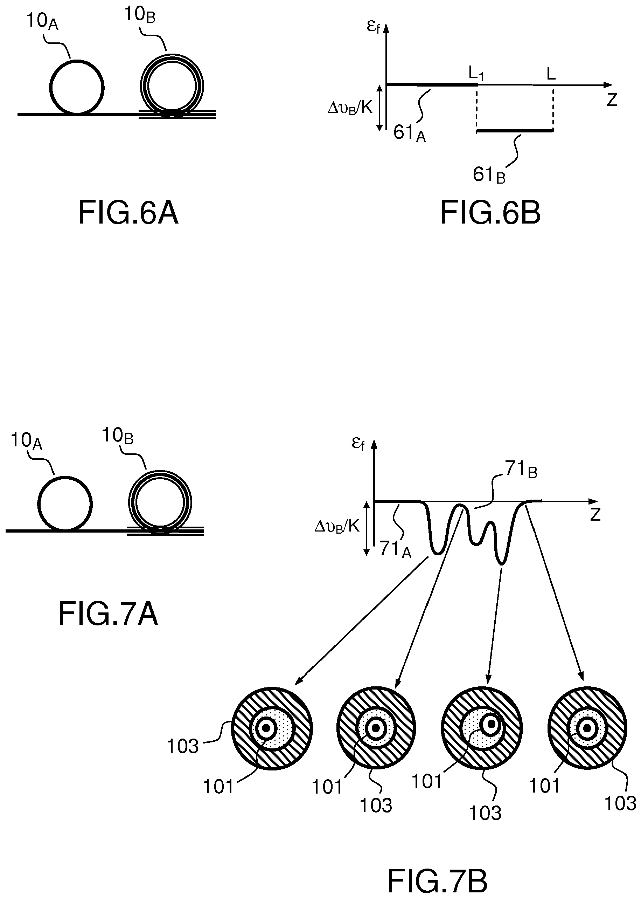

Les figures 6A et 7A représentent deux variantes de dispositifs selon la présente description, dans lesquelles seules sont représentées la fibre optique et la structure tubulaire.

Dans ces variantes, la fibre optique de longueur totale L comprend au moins deux tronçons, un premier tronçon $10_A$ non comprimé de longueur $L_1$ et un deuxième tronçon de longueur $L-L_1$ comprimé au moyen d'une structure tubulaire $10_B$, par exemple du type de celle décrite à travers les exemples précédents. Les figures 6B et 7B montrent respectivement la déformation relative $\varepsilon_f$ de la fibre optique le long de l'axe optique z de la fibre optique.

Dans l'exemple de la figure 6A, la fibre optique est maintenue dans le deuxième tronçon $10_B$ dans un état de compression sensiblement uniforme. La figure 6B représente les profils $61_A$ et $61_B$ de distribution de la déformation relative $\varepsilon_f$ de la fibre optique respectivement pour les tronçons $10_A$ et $10_B$. Dans cet exemple, la distribution est sensiblement uniforme sur chaque tronçon mais présente une valeur de déformation relative différente, respectivement nulle et négative. Chaque tronçon est de ce fait caractérisé par une fréquence Brillouin différente. Le tronçon $10_A$ possède une fréquence Brillouin $v_{B,1} = v_B{}^{ref}$. Le tronçon $10_B$ possède une fréquence Brillouin $v_{B,2} = v_B{}^{ref} + K\varepsilon_f$. Si dans cet exemple, la compression subie par le tronçon $10_B$ est telle que la différence $\delta v_B = v_{B,1} - v_{B,2} = K\varepsilon_f$ est supérieure à une fois la largeur de gain Brillouin $\Delta v_B$, on obtient une réduction de la longueur effective sur laquelle se cumule l'amplification Brillouin par rapport à la situation où la fibre subirait une déformation constante sur sa longueur. Finalement, le seuil Brillouin est augmenté de 3dB si la longueur de chaque tronçon est optimisée. L'augmentation du seuil Brillouin par rapport à la situation sans contrainte serait identique si $\delta v_B$ était plus grand que $\Delta v_B$. Un tel exemple peut être généralisé à un nombre arbitraire de segments dont les déformations relatives sont telles que la différence de fréquences Brillouin mesurée en deux points appartenant à deux segments distincts soit supérieure à $\Delta v_B$. Les segments peuvent être de longueur optimisée pour augmenter le seuil Brillouin pour une distribution longitudinale de puissance donnée. La compression appliquée dans la fibre dans chacun des tronçons peut aussi être optimisée.

Dans l'exemple de la figure 7A, la fibre optique est maintenue dans le deuxième tronçon $10_B$ dans un état de compression non uniforme. La figure 7B représente de façon schématique les profils $71_A$ et $71_B$ de distribution de la déformation relative $\varepsilon_f$ de la fibre optique respectivement pour les tronçons $10_A$ et $10_B$. Dans cet exemple, la distribution est non uniforme sur le tronçon $10_B$ de sorte que la fréquence Brillouin sur ce segment varie de plus que la largeur de gain Brillouin $\Delta v_B$. Dans le cas où la déformation relative $\varepsilon_f(z)$ imposée à la fibre optique en une position z varie suffisamment le long du tronçon pour que la fréquence Brillouin locale $\upsilon_B(z)$ varie de plus que $\Delta v_B$, on augmente directement le seuil Brillouin.

Une variation longitudinale de la contrainte le long d'un tronçon de fibre placé dans un tube peut être obtenue en utilisant un tube dont les caractéristiques varient longitudinalement le long de celui-ci. Par exemple, le diamètre interne ou externe du tube ou le module de Young ou l'excentricité du trou intérieur du tube 103 (définie comme la distance entre le centre du trou interne du tube et le centre de la circonférence externe du tube) peuvent varier le long de celui-ci.

La figure 7B illustre un exemple d'un dispositif dans lequel on obtient une variation longitudinale de la déformation relative $\varepsilon_f(z)$ en faisant varier la position de la fibre optique 101 dans le tube 103. La distribution de déformation relative $\varepsilon_f$ est obtenue en utilisant un tube 103 enfermant une fibre optique 101 dont la position radiale varie dans le trou central du tube le long de l'axe du tube. Une excentricité faible de la fibre optique correspond à une compression faible (en valeur absolue) tandis qu'une excentricité forte correspond à une plus forte compression.

Selon un deuxième aspect, la présente description concerne une méthode de fabrication d'un dispositif à fibre optique à seuil Brillouin élevé.

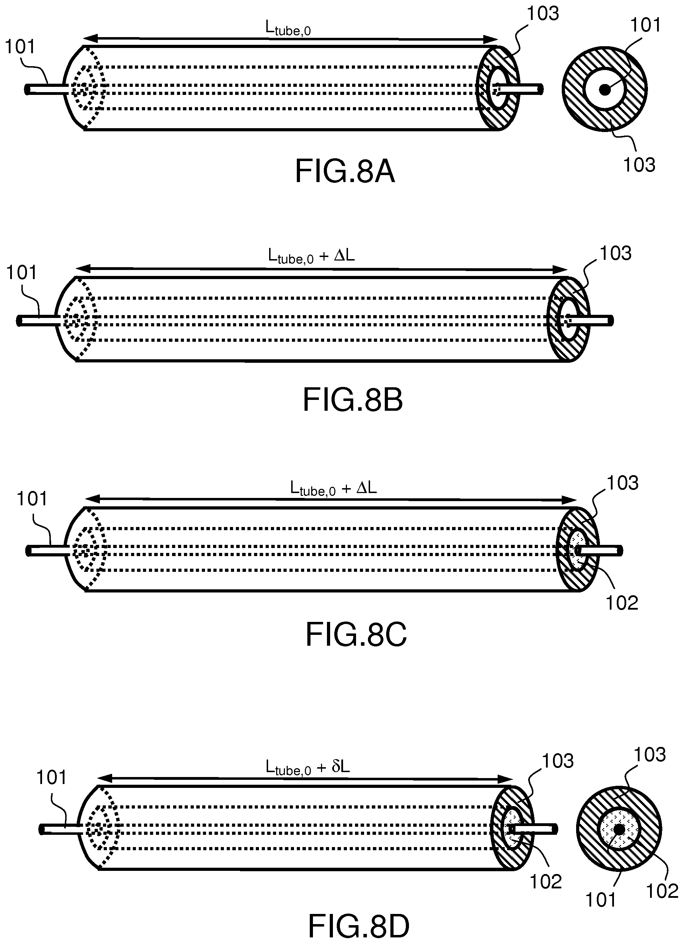

Les figures 8A à 8D décrivent une méthode permettant de réaliser un dispositif conforme à l'invention, selon un exemple.

Dans une première étape illustrée sur la figure 8A, la fibre optique 101 de diamètre de la partie en silice $d_1$ possède une section de sa partie en silice $S_1$ (où $S_1 = \pi d_1{}^2/4$) et module de Young équivalent $E_1$ est placée libre dans un tube 103 de diamètres intérieur et extérieur respectifs $d_2$ et $d_3$ entourant celle-ci de longueur $L_{tube,0}$, de section $S_3$ (où $S_3 = \pi(d_3 - d_2)^2/4$) et de module d'élasticité de Young $E_3$. Dans une deuxième étape, le tube 103 est allongé d'une longueur $\Delta L$. Il mesure alors $L_{tube,0} + \Delta L$ (figure 8B). La fibre optique 101 est rendue solidaire du tube 103 par l'ajout d'un matériau adhésif 102, par exemple une colle, à l'intérieur du tube 103 (figure 8C). Le matériau adhésif occupe une section $S_2$ (où $S_2 = \pi(d_2 - d_1)^2 / 4$) et il est caractérisé par un module de Young $E_2$. Après la polymérisation du matériau adhésif 102, le tube 103 est relâché et, sous l'effet de la force de rappel liée à son élasticité, revient vers sa position initiale. Comme le matériau adhésif et la fibre optique ont été placés à l'intérieur du tube, ce retour n'est que partiel. Le tube mesure alors une longueur $L_{tube,0} + \delta L$ avec $0 < \delta L < \Delta L$. Lors de ce retour vers sa position initiale, le tube transmet alors des contraintes compressives à la fibre optique 101 (figure 8D).

On définit la déformation relative initale $\varepsilon_s$ du tube comme :

$$\varepsilon_s = \frac{\Delta L}{L_{tube,0}}$$

en négligeant les effets du cisaillement, la déformation relative $\varepsilon_f$ appliquée à la fibre optique en compression vaut :

$$\varepsilon_f = -\varepsilon_s \frac{1}{1 + \frac{E_2 S_2 + E_1 S_1}{E_3 S_3}} \qquad\qquad (1)$$

On souhaite ainsi pour générer un grand $\varepsilon_f$ (en valeur absolue) utiliser un tube tel que le produit $E_3 S_3$ soit grand devant la somme des produits $E_2 S_2 + E_1 S_1$.

Par ailleurs, le tube doit également avoir une limite d'élasticité élevée de sorte qu'après application de la déformation $\varepsilon_s$, le tube revienne en place. Afin de déterminer les matériaux appropriés, on peut utiliser l'équation (1) et prendre pour $\varepsilon_s$ la limite d'élasticité du matériau utilisé pour le tube. Nous avons trouvé que des matériaux tels que les polyamides ou les polycarbonates sont particulièrement appropriés. En effet leur limite d'élasticité est supérieure à 1% et leur module de Young est supérieur à 1 GPa.

Un matériau approprié pour le tube doit posséder une limite d'élasticité élevée mais également permettre à l'assemblage complet formé du tube, de la fibre optique et du matériau adhésif de posséder un module de rigidité à la flexion faible (typiquement inférieur à 10000 N.mm$^2$). Cette propriété permet en effet à la structure tubulaire d'être courbée facilement. Elle peut ainsi être enroulée sur un diamètre compatible avec des dispositifs de taille raisonnable (rayon de courbure inférieur à 25cm) ou permettre la liaison entre deux points sans être contraints à un trajet en ligne droite. Le module de rigidité à la flexion peut par exemple être calculé pour une structure dans laquelle le tube et la fibre sont concentriques et où l'espace entre la fibre et la frontière interne du tube est complètement rempli de matériau adhésif selon l'expression :

$$EI = \frac{1}{64}\left[E_1 \pi d_1^4 + E_2 \pi\left(d_2^4 - d_1^4\right) + E_3 \pi\left(d_3^4 - d_2^4\right)\right]$$

où $E_3$ désigne le module de Young du tube, $E_2$ le module de Young du matériau adhésif, $E_1$ le module de Young équivalent de la fibre en silice, et $d_3$ désigne le diamètre externe du tube, $d_2$ le diamètre de la partie encollée donc le diamètre interne du tube, $d_1$ le diamètre de la partie en silice de la fibre.

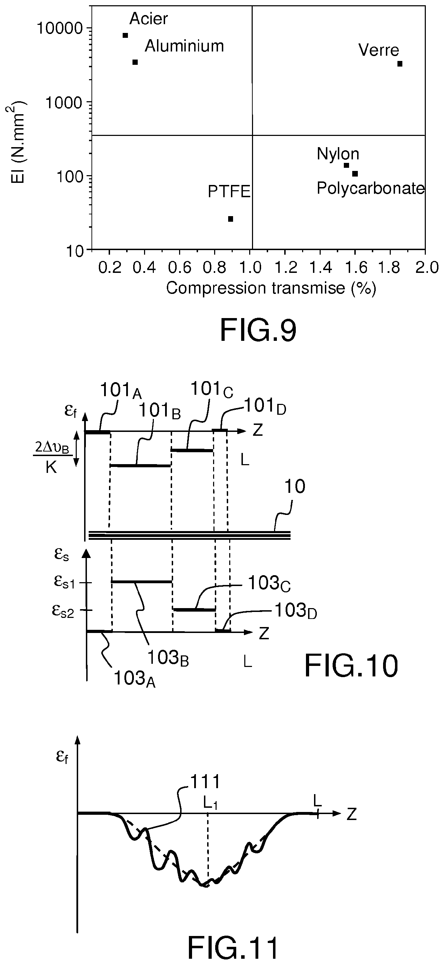

La figure 9 compare le module de rigidité à la flexion et la compression maximale transférée à la fibre à comprimer $\varepsilon_f$ à la limite élastique du tube pour différents exemples de matériaux de type : polyamide, polycarbonates, polytétrafluoroéthylène (PTFE), verre de silice, aluminium, acier. La déformation maximale transférée est calculée à partir de l'équation (1) en utilisant pour l'élongation du tube $\varepsilon_s$, la limite plastique au-delà de laquelle la déformation n'est plus réversible à plus de 90%. On a supposé pour le calcul de EI que $d_1$=125$\mu$m, $d_2$=500$\mu$m, $d_3$=1mm, $E_1$=70 GPa, $E_2$=1 GPa. Les matériaux les plus appropriés sont caractérisés par un faible module de rigidité EI et une forte compression transmise. Il s'agit donc du quadrant inférieur droit sur la figure 9. On constate notamment que les polyamides (nylon) et les polycarbonates ont des propriétés adéquates.

La section du tube (et donc les diamètres intérieurs et extérieurs dans le cas d'un tube cylindrique) est avantageusement choisie pour maximiser $\varepsilon_f$ en valeur absolue dans l'équation (1). La section du tube ne doit cependant pas être trop importante de façon à permettre au tube d'adopter un rayon de courbure par exemple de l'ordre de 25 cm. Le rayon de courbure minimum d'un tube de diamètre extérieur $d_3$ réalisé dans un matériau de module de Young E qui peut tolérer une contrainte maximale $\sigma_{max}$ vaut environ $R_c$=s E $d_3$/2/$\sigma_{max}$ en prenant un coefficient de sécurité s. Selon les applications et la durée de vie considérée, on pourra prendre pour $\sigma_{max}$ la limite élastique ou la limite à la rupture et un coefficient de sécurité s entre 1 et 10. On pourra imposer typiquement un rayon de courbure minimal égal à de 10 (pour les polycarbonates) à 100 fois le diamètre extérieur du tube (pour le verre).

Par ailleurs, le matériau adhésif est avantageusement caractérisé par un module $E_2$ élevé afin de s'opposer au flambage de la fibre. On choisira typiquement un matériau adhésif tel que $E_2 \geq 200$ MPa, avantageusement $E_2 \geq 500$ MPa, avantageusement $E_2 \geq 1$ GPa. Avantageusement le matériau adhésif pourra être chargé en fibres de verres ou en autres matériaux destinés à augmenter son module de Young. De même, le matériau composant le tube pourra être chargé afin d'augmenter sa limite élastique.

Il a été indiqué précédemment qu'il est avantageux d'utiliser un dispositif conforme à l'invention dans lequel les contraintes compressives appliquées à la fibre varient le long du dispositif.

Selon une variante, une technique utilisable pour générer des contraintes compressives qui varient le long du tube 103 consiste à polymériser le matériau adhésif situé en différentes zones du tube en appliquant des élongations $\varepsilon_s$ différentes en ces différentes zones.

La figure 10 illustre une variante dans laquelle différentes élongations sont appliquées en différents segments du tube référencés 103$_A$, 103$_B$, 103$_C$, 103$_D$ dans cet exemple. On peut par exemple polymériser le matériau adhésif situé à une extrémité 103$_A$ sans tendre le tube puis polymériser le matériau adhésif situé dans la première partie du tube 103$_B$ alors que celui-ci est sous tension $\varepsilon_{s1}$ puis réduire la tension appliquée à une valeur $\varepsilon_{s2}$ lors de la polymérisation de la deuxième partie 103$_C$. Enfin on relâche complètement le tube avant de polymériser l'autre extrémité 103$_D$. Après relâchement du tube, la fibre optique se trouve mise dans un état de compression caractérisé par un profil de déformation relative $\varepsilon_f$ où $\varepsilon_f$ et $\varepsilon_s$ sont liées par l'équation 1. Dans cet exemple, le profil de déformation relative $\varepsilon_f$ de la fibre optique comprend 4 tronçons 101$_A$, 101$_B$, 101$_C$, 101$_D$ correspondant aux tronçons 103$_A$, 103$_B$, 103$_C$, 103$_D$. Dans les zones où le tube a été étiré (103$_B$, 103$_C$), la fibre se trouve comprimée après relâchement du tube (101$_B$, 101$_C$).

De nombreuses variantes sont possibles pour la méthode de fabrication d'un dispositif conforme à la présente description.

Notamment, les étapes consistant, une fois la fibre optique placée dans le tube, à remplir le tube de matériau adhésif et à étirer le tube peuvent être réalisées dans un ordre chronologique indifférent.

Par ailleurs, dans le cas d'un étirement du tube variable par tronçon comme cela est illustré au moyen de la figure 10 par exemple, il est possible de procéder à la polymérisation du matériau adhésif zone par zone, la partie étirée de la structure tubulaire étant relâchée au fur et à mesure que l'on déplace la zone de polymérisation du matériau adhésif. Alternativement, le remplissage de l'espace interne de la structure tubulaire avec le matériau adhésif étant fait avant l'étirement de la structure tubulaire, la polymérisation du matériau adhésif peut être faite zone par zone et la structure tubulaire est étirée au fur et à mesure que l'on déplace la zone de polymérisation du premier matériau adhésif.

Selon une variante, il est possible de réaliser une structure tubulaire adaptée à comprimer une fibre optique placée dans l'espace interne d'un premier tube selon les moyens décrits précédemment, puis de positionner ce premier tube dans un deuxième tube et de reproduire les opérations d'étirement du deuxième tube, remplissage de l'espace interne du deuxième tube avec un deuxième matériau adhésif, polymérisation du deuxième matériau adhésif et relâchement du deuxième tube, de telle sorte que le deuxième tube confère une compression au premier tube. On obtient alors un dispositif du type de celui représenté sur la figure 4A. La fibre de module de Young $E_1$ et de section $S_1$, le premier matériau adhésif de module de Young $E_2$ et de section $S_2$, et le premier tube de module de Young $E_3$ et de section $S_3$ forment une première structure tubulaire. On peut définir son module de Young équivalent par $E=(E_1 S_1+E_2 S_2+E_3 S_3)/(S_1+S_2+S_3)$ et sa section par $S=S_1+S_2+S_3$. Le deuxième tube de module de Young $E_5$ et de section $S_5$ et le deuxième adhésif de module de Young $E_4$ et de section $S_4$ seront choisis de sorte que le rapport $(E_4 S_4+ES)/E_5 S_5$ soit le plus petit possible.

Selon une variante, il est possible de réaliser une structure tubulaire dans laquelle on vient placer dans l'espace interne du tube 103 des éléments de renfort (106, figure 5A). On pourra alors procéder à l'étirement des éléments de renfort, et éventuellement aussi à celui du tube. Après polymérisation du matériau adhésif dans lequel se trouvent noyés les éléments de renfort et relâchement de la tension, la fibre optique se trouve comprimée. Les éléments de renforts seront de façon préférable dans un état de tension après relâchement de la structure tubulaire. Les éléments de renforts sont caractérisés par leur module de Young $E_6$ et leur section totale $S_6$. Il est préférable de les choisir de sorte que $E_6 S_6$ soit grand devant $E_1 S_1$ et $E_2 S_2$. Il est préférable pour que l'effet des éléments de renforts soit significatif que $E_6 S_6$ soit égal à au moins 25% du produit $E_3 S_3$. Les éléments de renforts peuvent être par exemple des fibres optiques.

Dans le dispositif à fibre optique obtenu au moyen de la méthode selon la présente description, plusieurs couches caractérisées par des propriétés mécaniques différentes sont en contact d'adhérence. Comme leurs modules de Young ont des valeurs significativement différentes, il peut exister des contraintes de cisaillement près des interfaces. Par exemple, dans le cas d'une fibre optique comprenant une gaine en polymère, la gaine en polymère pourra être choisie telle que l'adhérence du polymère sur la fibre soit supérieure aux contraintes de cisaillement qui s'exercent à l'interface polymère/fibre. Typiquement le polyamide, l'ormocer® ont des propriétés adéquates pour la gaine de protection en polymère. Dans le cas de l'utilisation de polymères de bas indice, qui sont connus pour être en général moins résistants que les polymères de haut indice, on aura intérêt à prendre une épaisseur de polymère de bas indice la plus faible possible. Ce polymère de bas indice peut lui-même être recouvert d'un polymère de module plus grand et d'indice plus élevé. De même le matériau adhésif utilisé pour assembler la fibre et le tube est avantageusement sélectionné pour ses bonnes qualités d'adhésion sur le polymère de la fibre et le matériau formant le tube.

Selon une variante de l'invention qui contribue à réduire encore les risques de délaminage, la contrainte $\varepsilon_f$ imposée par le tube sur la fibre optique peut être choisie nulle ou inférieure à 0,3% au voisinage de chacune des deux extrémités de la fibre. Elle augmente ensuite sur une longueur caractéristique supérieure à quelques centimètres puis décroît vers la fin de la fibre pour redevenir inférieure à 0,3% à l'autre extrémité. Cette variante permet de réduire les forces de cisaillement qui s'exercent aux interfaces entre les différentes couches. On réduit ainsi le risque de délaminage.

La figure 11 représente un exemple d'un tel profil de contraintes. Le profil 111 de la déformation relative de la fibre présente dans cet exemple une déformation relative inférieure en valeur absolue à 0,3% aux extrémités et une enveloppe triangulaire dans la portion centrale (c'est-à-dire que le profil peut présenter de petites déviations par rapport au profil triangulaire).

Dans le cas par exemple d'un amplificateur à fibre optique, si le maximum de l'enveloppe triangulaire est atteint en $L_1=xL$, on peut montrer que lorsque la puissance du faisceau signal augmente selon une distribution $P(z)$ $0{\le}z{\le}L$ qui s'approche d'une distribution affine, il est avantageux de choisir x proche de 0,5, par exemple $0{,}4{\le}x{\le}0{,}6$. Ce cas est souvent réalisé pour un pompage copropagatif dans la gaine. Si la puissance augmente selon une distribution P(z) qui s'approche d'une distribution exponentielle, il est avantageux de choisir x proche de 0,8, par exemple $0,5 \leq x \leq 0,9$. Ce cas est souvent réalisé pour un pompage contrapropagatif dans la gaine ou un pompage dans le coeur.

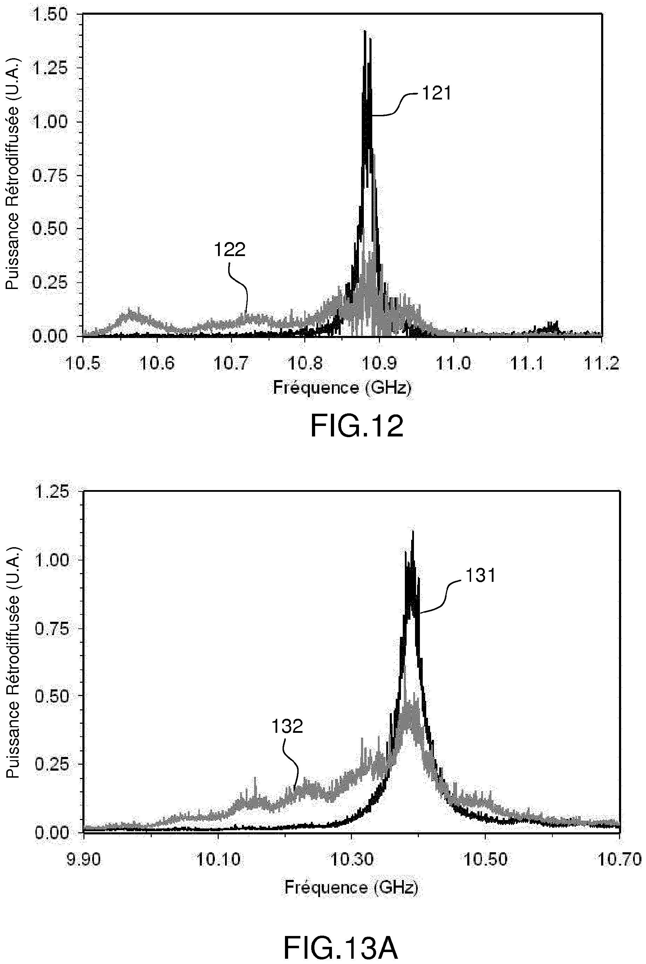

Les figures 12 à 14 illustrent des résultats expérimentaux obtenus selon trois configurations d'un dispositif selon la présente description, les paramètres pour chacune des configurations étant résumés dans le tableau 1 ci-dessous. Pour chacun de ces exemples, la structure tubulaire est du type de celle représentée sur la figure 3A, avec un tube en nylon type polyamide 11 désigné ensuite par PA11.

**Tableau 1 : Présentation des différentes configurations.**

| Config. | Fibre | $\Phi_{coeur}$ | $\Phi_{coating}$ | $\Phi_{intérieur}$ tube | $\Phi_{extérieur}$ tube |
|---|---|---|---|---|---|
| 1 | Passive | 10 $\mu$m | 250 $\mu$m | 1 mm | 2 mm |
| 2 | Active Er/Yb | 7,5 $\mu$m | 250 $\mu$m | 1 mm | 2 mm |
| 3 | Passive | 10 $\mu$m | 250 $\mu$m | 500 $\mu$m | 900 $\mu$m |

La figure 12 illustre des résultats expérimentaux obtenus avec la première configuration.

La fibre optique est une fibre monomode standard à 1550 nm à maintient de polarisation. Le diamètre du coeur est d'environ $\Phi_{coeur}$ = 10 $\mu$m, celui de la gaine est de 125 $\mu$m et celui du polymère de protection est de $\Phi_{coating}$ = 250 $\mu$m. Cette fibre optique, d'une longueur de 2,3 m est placée dans un tube en Nylon PA11 de diamètre intérieur 1 mm et de diamètre extérieur de 2 mm. Le module de Young $E_3$ de ce tube est compris entre 1 et 5 GPa. Le tube, d'une longueur de 2 m est allongé de 1,5 %. Le matériau adhésif injecté dans le tube est un matériau adhésif à polymérisation UV caractérisé par un module de Young $E_2$=1100 MPa. Une fois le tube relâché, la fibre est dans un état de compression, que l'on peut caractériser par détection hétérodyne en faisant battre l'onde Stokes rétrodiffusée avec le signal à amplifier. Cette caractérisation est faite en régime continu (la longueur d'onde du faisceau signal est 1545,3 nm).

La figure 12 montre ainsi une courbe 121 illustrant le gain Brillouin sur la fibre optique non contrainte et le gain Brillouin 122 sur la fibre optique comprimée.

Il apparaît que le spectre Brillouin n'est pas purement et simplement décalé en fréquence grâce à la compression. Celui-ci a plutôt tendance à être étalé. Ceci s'explique par les imperfections du tube (caractérisé par des fluctuations importantes de la position du centre du trou intérieur par rapport à la position du centre de sa circonférence extérieure) et le fluage local du tube lors de son étirement. Cet étalement présente un avantage pour la présente invention. Le décalage maximal observé est de 300 MHz, soit 10 fois la largeur à mi-hauteur du gain Brillouin. Nous avons mesuré que le seuil Brillouin dans cette configuration était augmenté de 5,7 dB.

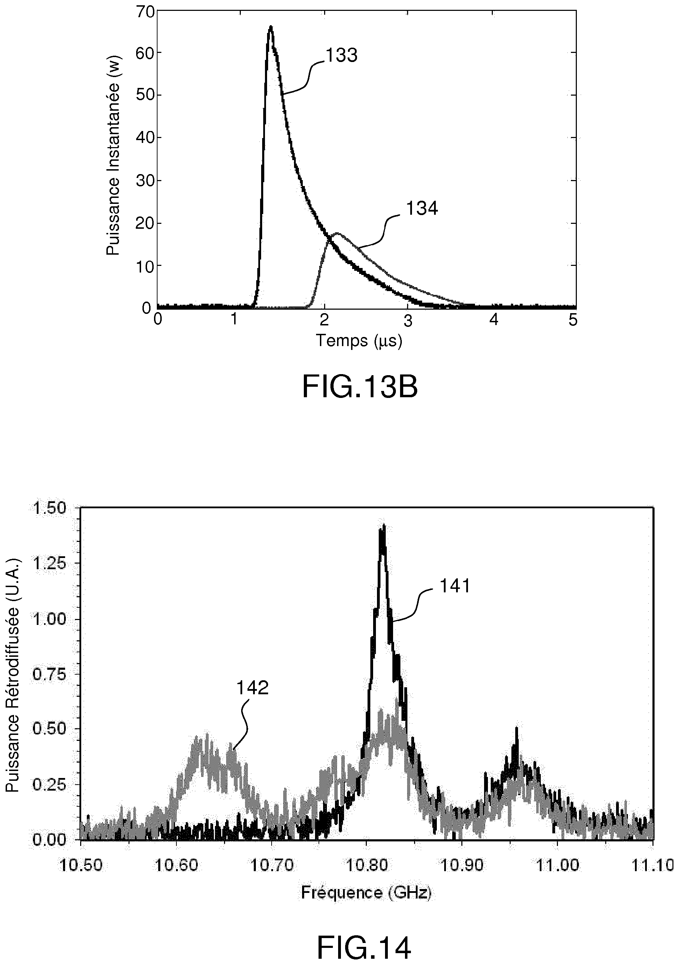

Les figures 13A et 13B illustrent des résultats expérimentaux obtenus avec la deuxième configuration.

Dans cette deuxième configuration la fibre est une fibre co-dopée erbium/ytterbium. Il s'agit ici de montrer le cas de l'amplification d'un faisceau signal de faible largeur spectrale et impulsionnel. La fibre active utilisée mesure 3,5 m et son diamètre de coeur est de 7,5 $\mu$m. Le faisceau signal (longueur d'onde 1545,3 nm) et le faisceau pompe (longueur d'onde 975 nm) sont respectivement couplés dans le coeur et la gaine de cette fibre grâce à un combineur de pompe fibré (selon un montage similaire par exemple aux amplificateurs décrits sur les figures 1A, 1B). A l'autre extrémité de la fibre active un isolateur fibré est soudé. La fin de la fibre active est insérée dans un tube en Nylon PA11 de 2,25 m de long. Le diamètre intérieur du tube est 1 mm et le diamètre extérieur est égal à 2 mm. Le module de Young $E_3$ de ce tube est compris entre 1 et 5 GPa. Le tube est caractérisé par des fluctuations importantes de la position du centre du trou intérieur par rapport à la position du centre de sa circonférence extérieure. Le tube est allongé de 1,5 % soit 3,4 cm. Le matériau adhésif injecté dans le tube est un matériau adhésif à polymérisation UV caractérisé par un module de Young $E_2$ de 1100 MPa. Une fois le tube relâché, la fibre est dans un état de compression que l'on peut caractériser grâce à l'onde Stokes rétrodiffusée qui est obtenu par détection hétérodyne en régime continu. L'observation de la structure tubulaire ainsi obtenue montre que la position de la fibre au sein du trou central du tube fluctue aussi le long de celle-ci.

La figure 13A montre ainsi une courbe 131 illustrant le gain Brillouin sur la fibre optique non contrainte et le gain Brillouin 132 sur la fibre optique comprimée.

Nous faisons la même observation que pour la première configuration, le spectre Brillouin n'est pas purement et simplement décalé en fréquence. La partie centrée autour de 10,39 GHz correspond essentiellement au spectre Brillouin de la partie de fibre non contrainte (1.25 m). Un décalage en fréquence supérieur à 300 MHz est observé.

En régime impulsionnel (impulsions de durée en sortie 420 ns et taux de répétition de 10 kHz) et mono-fréquence, une puissance crête de 66 W a été atteinte. Sans cette contrainte appliquée à la fibre, la puissance crête maximale atteinte est de 17,5W (pour des impulsions de durée en sortie 770ns et un taux de répétition de 10 kHz), ce qui représente un gain en puissance crête de 5,7dB. Les impulsions 134 émises par un amplificateur à fibre non contrainte et les impulsions 133 émises par un amplificateur à fibre comprimée sont montrées sur la figure 13B.

La figure 14 illustre des résultats expérimentaux obtenus avec la troisième configuration.

Dans cette troisième configuration, la fibre optique est de nouveau une fibre passive standard à 1550 nm à maintien de polarisation. Le diamètre du coeur est d'environ 10 $\mu$m, celui de la gaine est de 125 $\mu$m et celui du polymère de protection est de 250 $\mu$m. Cette fibre optique, d'une longueur de 2 m est placée dans un tube en Nylon PA11 de diamètre intérieur 0,5 mm et de diamètre extérieur de 0,9 mm. Le module de Young $E_3$ de ce tube est compris entre 1 et 5 GPa. Le tube, d'une longueur de 1,8 m est allongé de 1 %. Le matériau adhésif injecté dans le tube est un matériau adhésif à polymérisation UV caractérisé par un module de Young $E_2$ de 1,4 GPa. Une fois le tube relâché, la fibre est dans un état de compression, que l'on peut caractériser par détection hétérodyne en faisant battre l'onde Stokes rétrodiffusée avec le signal à amplifier. Cette caractérisation est faite en régime continu (la longueur d'onde du faisceau signal est 1545,3 nm).

La figure 14 montre ainsi une courbe 141 illustrant le gain Brillouin sur la fibre optique non contrainte et le gain Brillouin 142 sur la fibre optique comprimée.

Dans ce cas présent, le spectre Brillouin est décalé en fréquence grâce à la compression. Le décalage maximal observé est de 180 MHz, soit plus de 5 fois la largeur à mi-hauteur du gain Brillouin.

Dans l'exemple de la figure 14, la fibre possède moins de place dans le trou central pour voir sa position fluctuer par rapport aux tubes utilisés pour les première et deuxième configurations. De plus la position du centre du trou interne fluctue moins que dans les première et deuxième configurations. Dans cette troisième configuration, le tube ne présente pas de signe de fluage localisé. Il en résulte moins de fluctuations de la déformation relative subie par la fibre. C'est pour cela que le spectre Brillouin obtenu est une version décalée du spectre de la fibre au repos. Au contraire, dans l'exemple de la figure 12, les fluctuations étalent le spectre. Afin d'augmenter le seuil Brillouin plusieurs tronçons réalisés selon l'exemple de la figure 14 peuvent être juxtaposés de sorte que le décalage du pic Brillouin entre chaque tronçon soit supérieur à 30 MHz environ. En revanche un tronçon réalisé selon l'exemple de la figure 12 à lui seul verra son seuil Brillouin augmenté.

L'utilisation de tubes caractérisée par des fluctuations du centre des diamètres internes et externes et/ou un trou interne de diamètre interne supérieur à 1,5 fois le diamètre externe de la fibre présente donc un intérêt pour obtenir une contrainte variable le long du tube et donc spectre Brillouin élargi et un seuil Brillouin augmenté.

Dans toutes les configurations décrites, la structure tubulaire conserve un faible encombrement et peut être facilement connectée, permettant de conserver la souplesse d'utilisation des fibres optiques. Le dispositif selon la présente description représente ainsi un grand intérêt pour l'amplification de signaux ou pour réaliser des connecteurs ou munir d'entrées ou de sorties fibrées des composants destinés à transporter des signaux de forte puissance et de faible largeur spectrale.

Bien que décrite à travers un certain nombre d'exemples de réalisation détaillés, la structure et la méthode de réalisation du dispositif à fibre optique selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Dispositif à fibre optique à seuil Brillouin élevé comprenant :

   - une fibre optique (101) adaptée à la propagation d'un faisceau signal de forte puissance optique et comprenant une surface externe;
   - des moyens de couplage (11) d'un faisceau signal dans une extrémité d'entrée de la fibre optique (101) ;
   - une structure tubulaire (10) comprenant au moins un premier tube (103) avec une surface interne et au moins un premier matériau adhésif (102), tels que :

      ∘ une partie au moins de la fibre optique est immobilisée dans la structure tubulaire (10) au moyen du premier matériau adhésif (102), adhérent à la surface interne du premier tube (103) et à la surface externe de la fibre optique (101);
      ∘ à température ambiante et sans autres contraintes extérieures sur le dispositif, la partie immobilisée de la fibre optique (101) est maintenue dans un état de compression par la structure tubulaire, de telle sorte que

         ▪ la déformation relative de la partie immobilisée de la fibre optique dans la structure tubulaire est négative ou nulle ; et
         ▪ la valeur maximale de la valeur absolue de la déformation relative de la partie immobilisée de la fibre optique est supérieure à 0,3%.

2. Dispositif à fibre optique selon la revendication 1, dans lequel la partie immobilisée de la fibre optique (101) présente un état de compression avec un profil de déformation relative ($\epsilon_f$) variable le long de la fibre optique.

3. Dispositif à fibre optique selon la revendication 2, dans lequel le profil de déformation relative de la fibre optique est tel que la déformation relative de la partie immobilisée de la fibre optique soit comprise entre -0,3% et 0,3% au voisinage de chaque extrémité de la fibre optique.

4. Dispositif à fibre optique selon l'une quelconque des revendications précédentes, dans lequel le module de Young ($E_2$) du premier matériau adhésif est supérieur ou égal à 200 MPa, avantageusement 500 MPa.

5. Dispositif à fibre optique selon l'une quelconque des revendications précédentes, dans lequel le matériau formant le premier tube (103) appartient à la famille des polycarbonates ou des polyamides.

6. Dispositif à fibre optique selon l'une quelconque des revendications précédentes dans lequel le premier matériau adhésif (102) est polymérisable par radiation lumineuse de longueur d'onde d'activation donnée et le premier tube est au moins partiellement transparent à ladite longueur d'onde d'activation.

7. Dispositif à fibre optique selon l'une quelconque des revendications précédentes, dans lequel $E_1$ étant le module de Young équivalent de la fibre optique et $E_2$, $E_3$ étant les modules d'Young respectifs du premier matériau adhésif et du premier tube, $S_1$ étant la section de la fibre optique et $S_2$, $S_3$ étant les sections respectives du premier matériau adhésif et du premier tube, l'inéquation $E_1 S_1 + E_2 S_2 < E_3 S_3$ est respectée.

8. Dispositif à fibre optique selon l'une quelconque des revendications précédentes, dans lequel la structure tubulaire comprend au moins un deuxième tube (105) et au moins un deuxième matériau adhésif (104), tels que :

   ∘ le premier tube (103) est immobilisé dans le deuxième tube (105) au moyen du deuxième matériau adhésif (104), adhérent à la surface interne du deuxième tube et à la surface externe du premier tube ;
   ∘ à température ambiante et sans autres contraintes extérieures sur le dispositif, le premier tube (103) est maintenu dans un état de compression par au moins ledit deuxième tube (105).

9. Dispositif à fibre optique selon l'une quelconque des revendications précédentes, dans lequel la structure tubulaire comprend en outre des éléments de renfort (106) contribuant au maintien de la fibre optique dans ledit état de compression, les éléments de renfort étant positionnés dans l'espace interne formé entre la surface externe de la fibre optique (101) et la surface interne du tube (103) et immobilisés au moyen dudit premier matériau adhésif (102).

10. Dispositif à fibre optique selon l'une quelconque des revendications précédentes, dans lequel le module de rigidité à la flexion de la structure tubulaire est inférieur à 10000 N.mm$^2$.

11. Dispositif à fibre optique selon l'une quelconque des revendications précédentes, dans lequel la fibre optique étant une fibre optique amplificatrice de longueur L donnée, comprenant un coeur et une gaine, et étant adaptée à l'amplification d'un faisceau signal se propageant dans ledit coeur, le dispositif comprend en outre des moyens de couplage d'un faisceau pompe pour le pompage de ladite fibre optique amplificatrice.

12. Dispositif à fibre optique selon la revendication 11, dans lequel :

   - les moyens de couplage du faisceau pompe sont adaptés à un pompage de la fibre optique amplificatrice en configuration copropagative dans la gaine ; et
   - l'état de compression de la fibre optique amplificatrice présente un profil triangulaire avec un maximum en valeur absolue en un point situé à une position $L_1 = x.L$ où $0,4 \leq x \leq 0,6$.

13. Dispositif à fibre optique selon la revendication 11, dans lequel :

   - les moyens de couplage du faisceau pompe sont adaptés à un pompage de la fibre optique amplificatrice en configuration contrapropagative dans la gaine ou à un pompage de la fibre optique amplificatrice en configuration copropagative ou contrapropagative dans le coeur; et
   - l'état de compression de la fibre optique amplificatrice présente un profil triangulaire avec un maximum en valeur absolue en un point situé à une position $L_1 = x.L$ où $0,5 \leq x \leq 0,9$.

14. Système oscillateur maître amplifié comprenant une source d'émission laser d'un faisceau signal, une source d'émission laser d'un faisceau pompe et un dispositif à fibre optique selon l'une quelconque des revendications 11 à 13, destiné à amplifier ledit faisceau signal, dans lequel ledit faisceau pompe est couplé à la fibre optique amplificatrice du dispositif.

15. Méthode de fabrication d'un dispositif à fibre optique à seuil Brillouin élevé comprenant :

  - La mise en place d'au moins une partie d'une fibre optique dans un espace interne d'un premier tube d'une structure tubulaire ;
  - L'étirement d'une partie au moins de la structure tubulaire ;
  - Le remplissage de l'espace interne du premier tube avec un premier matériau adhésif polymérisable ;
  - La polymérisation du premier matériau adhésif ;
  - Le relâchement de la partie étirée de la structure tubulaire, entraînant une mise en compression de la fibre optique.

16. Méthode de fabrication selon la revendication 15, dans laquelle la polymérisation du premier matériau adhésif est faite zone par zone et ladite partie étirée de la structure tubulaire est relâchée au fur et à mesure que l'on déplace la zone de polymérisation du premier matériau adhésif.

17. Méthode de fabrication selon la revendication 15, dans laquelle le remplissage de l'espace interne de la structure tubulaire avec le premier matériau adhésif est fait avant l'étirement de la structure tubulaire, la polymérisation du premier matériau adhésif est faite zone par zone et la structure tubulaire est étirée au fur et à mesure que l'on déplace la zone de polymérisation du premier matériau adhésif.

18. Méthode de fabrication selon l'une quelconque des revendications 15 à 17, dans laquelle l'étirement d'une partie au moins de la structure tubulaire comprend l'étirement du premier tube.

19. Méthode de fabrication selon la revendication 18, comprenant en outre, après la polymérisation du premier matériau adhésif et le relâchement du premier tube étiré :

  - La mise en place du premier tube dans un espace interne d'un deuxième tube de la structure tubulaire;
  - L'étirement du deuxième tube ;
  - Le remplissage de l'espace interne du deuxième tube avec un deuxième matériau adhésif polymérisable;
  - La polymérisation du deuxième matériau adhésif;
  - le relâchement du deuxième tube étiré, entraînant une mise en compression du premier tube.

20. Méthode de fabrication selon l'une quelconque des revendications 15 à 19, comprenant en outre la mise en place dans l'espace interne du premier tube d'au moins un élément de renfort, l'étirement d'une partie au moins de la structure tubulaire comprenant l'étirement du ou des élément(s) de renfort.

**Patentansprüche**

1. Vorrichtung mit einer optischen Faser mit hoher Brillouin-Schwelle, die aufweist:

  - eine optische Faser (101), die zur Ausbreitung eines Signalstrahls mit hoher optischer Leistung ausgebildet ist und eine Außenfläche aufweist;
  - Kopplungsmittel (11) zum Koppeln eines Signalstrahls mit einem Eintrittsende der optischen Faser (101);
  - Rohrstruktur (10), die mindestens ein erstes Rohr (103) mit einer Innenfläche aufweist und mindestens ein erstes Haftmaterial (102), so dass:

    o mindestens ein Teil der optischen Faser in der Rohrstruktur (10) fixiert wird mittels des ersten Haftmaterials (102), das an der Innenfläche des ersten Rohrs (103) und an der Außenfläche der optischen Faser (101) haftet;
    o bei Raumtemperatur und ohne weitere äußere Einschränkungen der Vorrichtung der fixierte Teil der optischen Faser (101) durch die Rohrstruktur derart in einem Kompressionszustand gehalten wird, dass

      ▪ die relative Deformation des fixierten Teils der optischen Faser in der Rohrstruktur negativ oder gleich null ist; und

- der Maximalwert des Absolutwerts der relativen Deformation des fixierten Teils der optischen Faser größer als 0,3 % ist.

2. Vorrichtung mit einer optischen Faser nach Anspruch 1, wobei der fixierte Teil der optischen Faser (101) einen Kompressionszustand aufweist mit einem entlang der optischen Faser variablem relativen Deformationsprofil ($\varepsilon_f$).

3. Vorrichtung mit einer optischen Faser nach Anspruch 2, wobei das relative Deformationsprofil der optischen Faser derart ausgebildet ist, dass die relative Deformation des fixierten Teils der optischen Faser zwischen -0,3 % und 0,3 % in der Nähe zu jedem Ende der optischen Faser liegt.

4. Vorrichtung mit einer optischen Faser nach einem der vorstehenden Ansprüche, wobei das Youngscher Modul ($E_2$) des ersten Haftmaterials größer oder gleich 200 MPa ist, vorzugsweise 500 MPa.

5. Vorrichtung mit einer optischen Faser nach einem der vorstehen Ansprüche, wobei das das erste Rohr (103) bildende Material zur Familie der Polycarbonate oder der Polyamide gehört.

6. Vorrichtung mit einer optischen Faser nach einem der vorstehen Ansprüche, wobei das erste Haftmaterial (102) mittels Lichtstrahlung einer gegebenen Aktivierungswellenlänge polymerisierbar ist und das erste Rohr in der Aktivierungswellenlänge zumindest teilweise transparent ist.

7. Vorrichtung mit einer optischen Faser nach einem der vorstehenden Ansprüche, wobei $E_1$ das äquivalente Youngscher Modul der optischen Faser und $E_2$, $E_3$ das jeweilige Youngscher Modul des ersten Haftmaterials und des ersten Rohrs ist, $S_1$ der Abschnitt der optischen Faser und $S_2$, $S_3$ die jeweiligen Abschnitte des ersten Haftmaterials und des ersten Rohrs sind, wobei die Ungleichung $E_1S_1 + E_2S_2 < E_3S_3$ eingehalten wird.

8. Vorrichtung mit einer optischen Faser nach einem der vorstehenden Ansprüche, wobei die Rohrstruktur mindestens ein zweites Rohr (105) aufweist und mindestens ein zweites Haftmaterial (104), so dass:

  o das erste Rohr (103) im zweiten Rohr (105) fixiert ist mittels eines zweiten Haftmaterials (104), das an der Innenfläche des zweiten Rohrs und an der Außenfläche des ersten Rohrs haftet;
  o bei Raumtemperatur und ohne weitere äußere Einschränkungen der Vorrichtung das erste Rohr (103) durch mindestens das zweite Rohr (105) in einem Kompressionszustand gehalten wird.

9. Vorrichtung mit einer optischen Faser nach einem der vorstehen Ansprüche, wobei die Rohrstruktur ferner Verstärkungselemente (106) aufweist, durch welche die optische Faser im Kompressionszustand gehalten wird, wobei die Verstärkungselemente im Innenraum positioniert sind, der zwischen der Außenfläche der optischen Faser (101) und der Innenfläche des Rohrs (103) ausgebildet ist, und mittels des ersten Haftmaterials (102) fixiert sind.

10. Vorrichtung mit einer optischen Faser nach einem der vorstehenden Ansprüche, wobei das Biegesteifigkeitsmodul der Rohrstruktur kleiner als 10000 N.mm$^2$ ist.

11. Vorrichtung mit einer optischen Faser nach einem der vorstehenden Ansprüche, wobei die optische Faser eine verstärkende optische Faser mit gegebener Länge L ist, die einen Kern und eine Ummantelung aufweist und dazu ausgebildet ist, einen sich in dem Kern ausbreitenden Signalstrahl zu verstärken, wobei die Vorrichtung ferner Kopplungsmittel eines Pumpstrahls zum Pumpen der verstärkenden optischen Faser aufweist.

12. Vorrichtung mit einer optischen Faser nach Anspruch 11, wobei:

  - die Kopplungsmittel des Pumpenstrahls derart ausgebildet sind, dass sie die verstärkende optische Faser in einer copropagierenden Konfiguration in der Ummantelung pumpen; und
  - der Kompressionszustand der verstärkenden optischen Faser ein dreieckiges Profil aufweist mit einem absoluten Maximalwert an einem Punkt an einer Position $L_1 = x.L$ oder $0,4 \leq x \leq 0,6$.

13. Vorrichtung mit einer optischen Faser nach Anspruch 11, wobei:

  - die Kopplungsmittel des Pumpenstrahls derart ausgebildet sind, dass sie die verstärkende optische Faser in einer kontrapropagierenden Konfiguration in der Ummantelung pumpen oder die verstärkende optische Faser in einer kopropagierenden oder kontrapropagierenden Konfiguration im Kern pumpen; und
- der Kompressionszustand der verstärkenden optischen Faser ein dreieckiges Profil aufweist mit einem absoluten Maximalwert an einem Punkt an einer Position $L_1$ = x.L oder $0,5 \leq x \leq 0,9$.

**14.** Verstärktes Hauptoszillatorsystem mit einer Laseremissionsquelle eines Signalstrahls, einer Laseremissionsquelle eines Pumpstrahls und einer Vorrichtung mit einer optischen Faser nach einem der Ansprüche 11 bis 13 zum Verstärken des Signalstrahls, wobei der Pumpstrahl mit der verstärkenden optischen Faser der Vorrichtung gekoppelt ist.

**15.** Verfahren zum Herstellen einer Vorrichtung mit einer optischen Faser mit hoher Brillouin-Schwelle, die umfasst:

- Positionieren mindestens eines Teils einer optischen Faser in einem Innenraum des ersten Rohrs einer Rohrstruktur;
- Ausdehnen mindestens eines Teils der Rohrstruktur;
- Füllen des Innenraums des ersten Rohrs mit einem ersten polymerisierbarem Haftmaterial;
- Polymerisieren des ersten Haftmaterials;
- Lösen des ausgedehnten Teils der Rohrstruktur, wodurch die optische Faser komprimiert wird.

**16.** Verfahren zur Herstellung nach Anspruch 15, wobei die Polymerisation des ersten Haftmaterials Zone für Zone durchgeführt wird und der ausgedehnte Teil der Rohrstruktur schrittweise gelöst wird, wenn der Polymerisationsbereich des ersten Haftmaterials versetzt wird.

**17.** Verfahren zur Herstellung nach Anspruch 15, wobei der Innenraum der Rohrstruktur mit dem ersten Haftmaterial gefüllt wird, bevor die Rohrstruktur ausgedehnt wird, wobei die Polymerisation des ersten Haftmaterials Zone für Zone durchgeführt wird und die Rohrstruktur schrittweise ausgedehnt wird, wenn die Polymerisationszone des ersten Haftmaterials versetzt wird.

**18.** Verfahren zur Herstellung nach einem der Ansprüche 15 bis 17, wobei das Ausdehnen mindestens eines Teils der Rohrstruktur ferner das Ausdehnen des ersten Rohrs umfasst.

**19.** Verfahren zur Herstellung nach Anspruch 18, das nach der Polymerisation des ersten Haftmaterials und des Lösens des ersten ausgedehnten Rohrs ferner umfasst:

- Positionieren des ersten Rohrs in einem Innenraum eines zweiten Rohrs der Rohrstruktur;
- Ausdehnen des zweiten Rohrs;
- Füllen des Innenraums des zweiten Rohrs mit einem zweiten polymerisierbarem Haftmaterial;
- Polymerisieren des zweiten Haftmaterials;
- Lösen des ausgedehnten zweiten Rohrs, wodurch das erste Rohr komprimiert wird.

**20.** Verfahren zur Herstellung nach einem der Ansprüche 15 bis 19, das ferner das Positionieren mindestens eines Verstärkungselements im Innenraum des ersten Rohrs umfasst, wobei das Ausdehnen des mindestens einen Teils der Rohrstruktur das Ausdehnen eines oder mehrere Verstärkungselemente umfasst.

**Claims**

**1.** A fiber-optic device having a high Brillouin threshold comprising:

- an optical fiber (101) suitable for the propagation of a signal beam of high optical power and having an external surface;
- means (11) for coupling a signal beam into an entry end of the optical fiber (101);
- a tubular structure (10) comprising at least one first tube (103) with an internal surface and at least one first adhesive material (102), such that:

    ◦ at least one portion of the optical fiber is immobilized in the tubular structure (10) by means of the first adhesive material (102), adhering to the internal surface of the first tube (103) and to the external surface of the optical fiber (101);
    ◦ at room temperature and with no other external stresses on the device, the immobilized portion of the optical fiber (101) is maintained in a compressive state by the tubular structure, in such a way that

- the strain of the immobilized portion of the optical fiber in the tubular structure is negative or zero; and
- the maximum absolute value of the strain of the immobilized portion of the optical fiber is greater than 0.3%.

2. The fiber-optic device as claimed in claim 1, wherein the immobilized portion of the optical fiber (101) has a compressive state with a strain profile ($\varepsilon_f$) that is variable along said immobilized portion.

3. The fiber-optic device as claimed in claim 2, wherein the strain profile of the optical fiber is such that the strain of the immobilized portion of the optical fiber is comprised between -0.3% and 0.3% in the vicinity of each end of the optical fiber.

4. The fiber-optic device as claimed in any one of the preceding claims, wherein the Young's modulus ($E_2$) of the first adhesive material is greater than or equal to 200 MPa, advantageously 500 MPa.

5. The fiber-optic device as claimed in any one of the preceding claims, wherein the material forming the first tube (103) belongs to the family of polycarbonates or polyamides.

6. The fiber-optic device as claimed in any one of the preceding claims, wherein the first adhesive material (102) can be polymerized by light radiation of given activation wavelength and the first tube is at least partially transparent at said activation wavelength.

7. The fiber-optic device as claimed in any one of the preceding claims, wherein, $E_1$ being the equivalent Young's modulus of the optical fiber, $E_2$ and $E_3$ being the respective Young's moduli of the first adhesive material and the first tube, $S_1$ being the section of the optical fiber, $S_2$ and $S_3$ being the respective sections of the first adhesive material and the first tube, the condition $E_1 S_1 + E_2 S_2 < E_3 S_3$ is complied with.

8. The fiber-optic device as claimed in any one of the preceding claims, wherein the tubular structure comprises at least one second tube (105) and at least one second adhesive material (104), such that:

   ◦ the first tube (103) is immobilized in the second tube (105) by means of the second adhesive material (104), adhering to the internal surface of the second tube and to the external surface of the first tube;
   ◦ at room temperature and with no other exterior stresses on the device, the first tube (103) is maintained in a compressive state by at least said second tube (105).

9. The fiber-optic device as claimed in any one of the preceding claims, wherein the tubular structure further comprises reinforcing elements (106) contributing to maintaining the optical fiber in said compressive state, the reinforcing elements being positioned in the internal space formed between the external surface of the optical fiber (101) and the internal surface of the tube (103) and immobilized by means of said first adhesive material (102).

10. The fiber-optic device as claimed in any one of the preceding claims, wherein the bending stiffness of the tubular structure is less than 10000 N.mm$^2$.

11. The fiber-optic device as claimed in any one of the preceding claims, wherein, the optical fiber being an amplifying optical fiber of given length L, comprising a core and a cladding, and being adapted to amplify a signal beam being propagated in said core, the device further comprises means for coupling a pump beam for pumping said amplifying optical fiber.

12. The fiber-optic device as claimed in claim 11, wherein:

   - the pump beam coupling means are adapted to pump the amplifying optical fiber in a copropagative configuration in the cladding; and
   - the compressive state of the amplifying optical fiber has a triangular profile with a maximum absolute value at a point situated at a position $L_1 = x.L$ where $0.4 \leq x \leq 0.6$.

13. The fiber-optic device as claimed in claim 11, wherein:

- the pump beam coupling means are adapted to pump the amplifying optical fiber in a contrapropagative configuration in the cladding or to pump the amplifying optical fiber in a copropagative or contrapropagative configuration in the core; and
- the compressive state of the amplifying optical fiber has a triangular profile with a maximum absolute value at a point situated at a position $L_1 = x.L$ where $0.5 \leq x \leq 0.9$.

14. An amplified master oscillator system comprising a laser emission source of a signal beam, a laser emission source of a pump beam and a fiber-optic device as claimed in any one of claims 11 to 13 intended to amplify said signal beam wherein said pump beam is coupled to the amplifying optical fiber of the device.

15. A method of manufacturing a fiber-optic device having a high Brillouin threshold comprising:

- placing at least a portion of an optical fiber in an internal space of a first tube of a tubular structure;
- stretching at least a portion of the tubular structure;
- filling the internal space of the first tube with a polymerizable first adhesive material;
- polymerizing the first adhesive material;
- releasing the stretched portion of the tubular structure, leading to compression of the optical fiber.

16. The method of manufacture as claimed in claim 15, wherein the first adhesive material is polymerized area by area and said stretched portion of the tubular structure is released as the area of polymerization of the first adhesive material moves.

17. The method of manufacture as claimed in claim 15, wherein the internal space of the tubular structure is filled with the first adhesive material before stretching the tubular structure, the first adhesive material is polymerized area by area and the tubular structure is stretched as the area of polymerization of the first adhesive material is moved.

18. The method of manufacture as claimed in any one of claims 15 to 17, wherein the stretching of at least a portion of the tubular structure comprises stretching the first tube.

19. The method of manufacture as claimed in claim 18, further comprising, after polymerizing the first adhesive material and releasing the stretched first tube:

- placing the first tube in an internal space of a second tube of the tubular structure;
- stretching the second tube;
- filling the internal space of the second tube with a polymerizable second adhesive material;
- polymerizing the second adhesive material;
- releasing the stretched second tube, leading to compression of the first tube.

20. The method of manufacture as claimed in any one of claims 15 to 19, further comprising placing in the internal space of the first tube at least one reinforcing element, the stretching at least a portion of the tubular structure comprising stretching the reinforcing element or elements.

FIG.1A

FIG.1B

ART ANTERIEUR

FIG.2

ART ANTERIEUR

FIG.3A

FIG.3B

FIG.4A

FIG.4B

FIG.5A

FIG.5B

FIG.6A

FIG.6B

FIG.7A

FIG.7B

FIG.8A

FIG.8B

FIG.8C

FIG.8D

FIG.9

FIG.10

FIG.11

FIG.12

FIG.13A

FIG.13B

FIG.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5136673 A

**Littérature non-brevet citée dans la description**

- **R. ENGELBRECHT et al.** SBS shaping and suppression by arbitrary strain distributions realized by a fiber coiling machine. *IEEE/LEOS Winter Topicals Meeting Series,* 2009, 248-249
- **M. H. REEVES et al.** investigation of optical fibre buckling in loose-tube packaging. *Electronics Letters,* 1978, vol. 14 (3
- **N. YOSHIZAWA et al.** Stimulated Brillouin Scattering Suppression by Means of Applying Strain Distribution to Fiber with Cabling. *JOURNAL OF LIGHTWAVE TECHNOLOGY,* 01 Octobre 1993, vol. 11 (10), 1518-1522